# FASCICULE DE BREVET EUROPEEN

(11) **EP 3 705 002 B1**
(45) Date de publication et mention de la délivrance du brevet: **15.09.2021**
(21) Numéro de dépôt: 19161733.1
(22) Date de dépôt: 08.03.2019
(51) Int. Cl.: A47J 27/08

(54) **APPAREIL DE CUISSON SOUS PRESSION COMPORTANT UN JOINT D'ÉTANCHÉITÉ**
DRUCKKOCHGERÄT, DAS EINE DICHTUNG UMFASST
PRESSURE-COOKING APPLIANCE COMPRISING A SEALING GASKET

(43) Date de publication de la demande: 09.09.2020
(73) Titulaire: LAGOSTINA S.p.A., 28887 Omegna (VB) (IT)
(72) Inventeur: MILANESI, Fausto, CAP 28837 BAVENO (VB) (IT)
(74) Mandataire: SEB Développement

(56) Documents cités:
- EP-A1- 1 938 718
- EP-A1- 2 801 303
- CH-A- 321 817
- DE-C1- 4 420 144

## Description

La présente invention se rapporte au domaine technique général des appareils de cuisson d'aliments, notamment de nature domestique, destinés à former une enceinte de cuisson hermétique au sein de laquelle sont cuits les aliments sous pression de vapeur.

La présente invention concerne plus particulièrement des appareils de cuisson sous pression à couvercle rentrant. De tels appareils sont habituellement désignés dans le domaine technique sous l'appellation « autocuiseurs à couvercle rentrant », dans la mesure où ils mettent en œuvre un couvercle qui doit d'abord être rentré dans une cuve avant de venir en contact étanche avec un rebord supérieur centripète de cette dernière.

Il existe de surcroît différentes technologies d'autocuiseurs à couvercle rentrant. On connaît ainsi les autocuiseurs « à trou d'homme », qui mettent en œuvre d'une part une cuve dont le bord supérieur rentrant délimite une ouverture ovale et d'autre part un couvercle de forme conjuguée ovale.

Cette conjugaison de formes ovales permet d'introduire entièrement le couvercle à l'intérieur de la cuve, puis, une fois qu'il est positionné sous le bord rentrant centripète, de l'aligner avec l'ouverture de cuve pour qu'il vienne se plaquer de manière étanche contre un joint d'étanchéité agencé entre le bord rentrant et le couvercle.

La conception de ces appareils « à trou d'homme » interdit bien entendu par nature l'utilisation de couvercles circulaires. Il existe toutefois des autocuiseurs à couvercle rentrant permettant la mise en œuvre des couvercles circulaires. Ces appareils sont généralement connus sous l'appellation « autocuiseurs à couvercle flexible ». Ces appareils sont basés sur le principe de l'utilisation d'un couvercle capable de passer, sous l'effet d'une sollicitation mécanique en flexion, d'une configuration géométrique de repos permettant l'introduction du couvercle dans la cuve, à une configuration géométrique déformée permettant de réaliser la fermeture hermétique de la cuve.

On connait notamment du document DE3010205, un autocuiseur à couvercle flexible comprenant une cuve dont le bord rentrant délimite une ouverture de cuve circulaire et un couvercle obtenu à partir d'un flan métallique circulaire roulé. Le bord rentrant de la cuve présente une extrémité libre roulée qui définit un logement orienté vers le fond de la cuve et qui est destiné à recevoir un joint d'étanchéité torique. Dans sa configuration de repos, le couvercle présente une forme de disque « roulé », c'est à dire cintré, qui lui permet d'être introduit au sein de la cuve sous le bord rentrant. Dans sa configuration déformée le couvercle présente une forme de disque sensiblement plat, qui lui permet de venir en appui continu et uniforme contre le joint d'étanchéité, de façon à former une enceinte étanche. Cet appareil à couvercle flexible connu est également doté d'une part d'un moyen de commande du déplacement du couvercle comprenant un levier monté pivotant sur une fourche solidaire du couvercle et d'autre part d'un étrier monté librement mobile relativement à la fourche et destiné à venir en appui contre la cuve, à l'extérieur de cette dernière, au-dessus du bord rentrant centripète. Le levier prend appui sur l'étrier par l'intermédiaire d'une came pour exercer un effort de traction sur le centre du couvercle permettant de rapprocher le couvercle de l'étrier.

Le fonctionnement de cet autocuiseur connu est le suivant. Le couvercle, dans sa configuration de repos, est introduit à l'intérieur de la cuve sous le bord rentrant de cette dernière, tandis que l'étrier vient en appui sur et contre la cuve, au-dessus dudit bord rentrant. L'utilisateur actionne alors le levier en rotation ce qui a pour effet d'exercer sur le centre du couvercle un effort de rapprochement du couvercle et de l'étrier, ce dernier restant fixe en position. Le couvercle vient alors en appui contre le joint d'étanchéité, sous le bord rentrant de la cuve et se déforme en flexion jusqu'à atteindre sa configuration déformée, dans laquelle sa périphérie est uniformément plaquée contre le joint d'étanchéité, ce qui permet de réaliser une enceinte de cuisson étanche. L'utilisateur soumet ensuite l'enceinte de cuisson étanche ainsi formée à une source de chaleur, de manière à augmenter la température et la pression régnant au sein de l'enceinte et cuire les aliments présents dans l'enceinte sous pression de vapeur.

Dans un tel autocuiseur, le joint d'étanchéité torique est monté de manière ajustée dans le logement de section transversale partiellement circulaire formé par l'extrémité libre roulée du bord rentrant. Lorsque le couvercle est dans sa position déformée, il appuie sur le joint d'étanchéité torique qui est comprimé dans son logement et a, ainsi, peu de latitude pour se déformer. En conséquence, le couvercle et le joint d'étanchéité sont en contact sur une surface d'étanchéité limitée.

De plus, l'extrémité libre roulée se referme légèrement sur elle-même et le joint d'étanchéité torique doit être monté en force dans le logement. Lors du montage, les doigts de l'utilisateur ont accès à une faible surface d'appui sur la périphérie externe du joint d'étanchéité pour le pousser dans son logement. Un tel montage en force du joint d'étanchéité torique dans le logement le rend également difficile à démonter sans l'endommager. Ainsi, il n'est pas possible de nettoyer complètement la cuve dans la zone où est agencé le joint d'étanchéité.

Le remplacement d'un tel joint après plusieurs années d'utilisation est également difficile, le joint d'étanchéité ayant durci. Ainsi, des outils spécifiques sont requis pour son démontage.

On connait du document DE4420144 un joint d'autocuiseur.

Le but de la présente invention est de remédier aux inconvénients précités et de proposer un appareil de cuisson d'aliments sous pression à couvercle rentrant muni d'un joint d'étanchété présentant une construction optimisée pour permettre à l'utilisateur de le nettoyer facilement.

Un autre but de l'invention est de proposer un appareil de
cuisson d'aliments sous pression à couvercle rentrant muni d'un joint d'étanchété qui soit de conception simple et économique à mettre en œuvre.

Un autre but de l'invention est de proposer un appareil de cuisson d'aliments sous pression à couvercle rentrant qui présente une construction optimisée pour un fonctionnement en toute sécurité.

Ces buts sont atteints avec un appareil de cuisson d'aliments sous pression selon la revendication 1.

Ainsi, la face inférieure de la portion inférieure du corps et la face inférieure de la lèvre forment une surface d'appui importante pour le couvercle lorsque celui-ci est dans une configuration déformée de façon à améliorer l'étanchéité de l'enceinte de cuisson, lors de la montée en pression.

La lèvre qui dépasse vers l'intérieur de la cuve, de manière visible, offre à l'utilisateur une zone de préhension pour permettre d'extraire la portion supérieure de forme semi-circulaire du joint d'étanchéité du logement formé par la face interne de l'extrémité libre roulée. Ainsi, le joint d'étanchéité peut être facilement retiré de la cuve sans outil pour permettre un nettoyage du joint d'étanchéité et de la cuve.

La face inférieure de la portion inférieure du corps et la face inférieure de la lèvre forment une surface d'appui suffisante pour les doigts de l'utilisateur pour permettre d'insérer la portion supérieure de forme partiellement circulaire dans le logement formé par la face interne de l'extrémité libre roulée lors du remontage du joint d'étanchéité dans son logement.

Un tel démontage/remontage facilité du joint d'étanchéité dans son logement permet d'autoriser l'utilisateur à changer le joint d'étanchéité lui-même au lieu de lui faire ramener l'appareil dans un centre de réparation.

De manière avantageuse, le joint d'étanchéité présente une section transversale en forme de d minuscule, la barre du d étant agencée de manière majoritairement horizontale.

De préférence, le secteur circulaire de la section transversale de la portion supérieure s'étend sur un secteur angulaire supérieur à 180°, de préférence égal à 200°.

Ainsi, le joint d'étanchéité est maintenu par sa portion supérieure dans le logement de forme complémentaire qui se referme sur lui même.

Avantageusement, la lèvre s'étend de manière continue sur toute une périphérie interne dudit joint d'étanchéité.

Ainsi, la face inférieure de la portion inférieure du corps et la face inférieure de la lèvre forment une surface d'appui régulière sur toute la périphérie inférieure du joint d'étanchéité.

De préférence, dans une section transversale du joint d'étanchéité, la face inférieure de la portion inférieure du corps et la face inférieure de la lèvre sont rectilignes.

Ainsi, la face inférieure de la portion inférieure du corps et la face inférieure de la lèvre forment une surface d'appui apte à coopérer avec une face périphérique supérieure plane du couvercle dans sa position déformée.

Avantageusement, le secteur circulaire de la section transversale de la portion supérieure présente un rayon R et la lèvre s'étend radialement depuis la portion inférieure du corps sur une distance D supérieure au rayon R.

De préférence, le secteur circulaire de la section transversale de la portion supérieure présente un rayon R et dans une section transversale du joint d'étanchéité, la face inférieure de la portion inférieure du corps s'étend sur une distance d supérieure au rayon R.

De telles dispositions permettent d'obtenir une grande surface d'appui entre le joint d'étanchéité et le couvercle lorsque celui-ci est en position déformée pour former une enceinte de cuisson étanche.

Avantageusement, la lèvre présente une épaisseur E constante.

Ainsi, la pression exercée sur le couvercle en position déformée par la lèvre est répartie de manière sensiblement uniforme.

De préférence, la lèvre forme avec un plan horizontal un angle α supérieur à 20°, de préférence supérieur à 40°.

Ainsi, le couvercle en position déformée repousse la lèvre vers le haut, ce qui garantit un bon contact étanche entre le couvercle et la face inférieure de la lèvre. Avantageusement, la lèvre comporte une patte de préhension qui s'étend depuis une extrémité libre de la lèvre, dans le prolongement de la lèvre, vers l'intérieur de la forme annulaire.

Une telle patte de préhension est facile à saisir par l'utilisateur pour démonter le joint d'étanchéité de la cuve.

De préférence, le joint d'étanchéité est réalisé dans un matériau élastomère, par exemple en silicone ou en caoutchouc synthétique.

Avantageusement, l'extrémité libre roulée comporte un champ et la lèvre comporte une face supérieure, la face supérieure étant agencée en vis-à-vis du champ. Ainsi, la lèvre est pincée entre le champ de l'extrémité libre roulée et le couvercle lorsque celui-ci est en position déformée.

De préférence, le couvercle comporte un bord périphérique destiné à venir en appui sur une surface d'appui formée par la face inférieure de la portion inférieure du corps et par la face inférieure de la lèvre.

L'invention sera mieux comprise à l'étude du mode de réalisation pris à titre nullement limitatif et illustré dans les figures annexées dans lesquelles :
- La figure 1 est une vue en perspective d'un appareil de cuisson d'aliments sous pression à couvercle rentrant muni d'un joint d'étanchéité selon un mode particulier de réalisation de l'invention.
- La figure 2 est une vue en coupe partielle selon la ligne II-II et en perspective de l'appareil de cuisson d'aliments sous pression à couvercle rentrant muni du joint d'étanchéité de la figure 1, le couvercle étant en position de repos.
- La figure 3 est une vue en coupe partielle selon la ligne II-II et en perspective de l'appareil de cuisson d'aliments sous pression à couvercle rentrant muni du joint d'étanchéité de la figure 1, le couvercle étant en position déformée.
- La figure 4 est une vue en coupe selon le détail IV du joint d'étanchéité de la figure 2.
- La figure 5 est une vue en perspective partielle de l'appareil de cuisson d'aliments sous pression à couvercle rentrant muni du joint d'étanchéité de la figure 1, le joint d'étanchéité comportant une patte de préhension.

On notera que, dans ce document, les termes «horizontal», «vertical», «inférieur», «supérieur», «longitudinal», «transversal», «haut», «bas», employés pour décrire l'appareil de cuisson d'aliments sous pression à couvercle rentrant et le joint d'étanchéité font référence à cet appareil de cuisson d'aliments sous pression à couvercle rentrant muni du joint d'étanchéité en situation d'usage, lorsqu'il est posé sur une source de chauffe ou sur un plan de travail horizontal et au joint d'étanchéité lorsqu'il est démonté et repose sur un plan de travail horizontal ou lorsqu'il est agencé sur une cuve posée sur un plan de travail horizontal.

Un appareil de cuisson sous pression 1 à couvercle rentrant conforme à l'invention est destiné à assurer la cuisson d'aliments, sous pression de vapeur. De façon préférentielle, l'appareil de cuisson sous pression 1 est constitué par un appareil de cuisson sous pression domestique, conçu pour une utilisation dans un contexte familial.

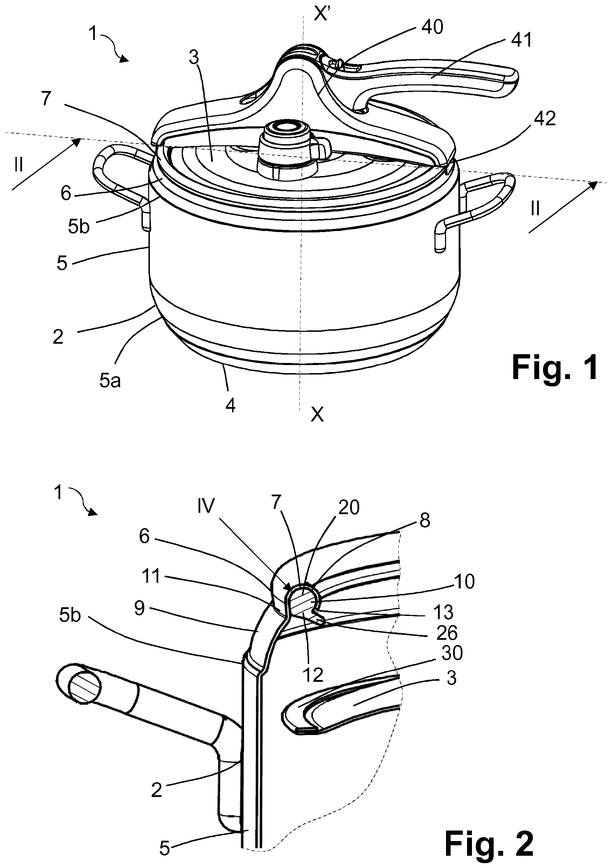

Tel qu'illustré à la figure 1, l'appareil de cuisson sous pression 1 comprend au moins une cuve 2 qui forme un récipient de cuisson, c'est-à-dire que ladite cuve 2 est destinée à accueillir les aliments soit directement, soit par l'intermédiaire d'un panier de cuisson (non représenté) inséré dans la cuve 2 et contenant lesdits aliments. La cuve 2 présente par exemple, une symétrie de révolution selon un axe X-X'. Dans ce qui suit, l'adjectif « axial » se réfère à la direction de cet axe de symétrie X-X', direction qui s'apparente à la direction verticale lorsque l'appareil de cuisson sous pression 1 est en fonctionnement normal. Bien évidemment, la cuve 2 peut tout à fait ne pas affecter une forme de révolution (et être par exemple de forme ovale), sans pour autant que l'on sorte du cadre de l'invention.

L'appareil de cuisson sous pression 1 comporte également au moins un couvercle 3 destiné à coopérer avec la cuve 2 pour former avec cette dernière une enceinte de cuisson.

Selon l'invention, l'appareil de cuisson sous pression 1 est un appareil à couvercle rentrant. Cela signifie que pour former, à l'aide de la cuve 2 et du couvercle 3, une enceinte étanche de cuisson, il est nécessaire d'introduire tout d'abord entièrement le couvercle 3 à l'intérieur de la cuve 2, sous un bord rentrant 6 supérieur de cette dernière, ledit bord rentrant 6 délimitant l'ouverture d'accès à l'intérieur de la cuve 2, puis d'imprimer audit couvercle 3 un mouvement vertical de bas en haut pour que le couvercle 3 vienne en appui étanche contre un joint d'étanchéité 20 agencé sous le bord rentrant 6 supérieur, pour obtenir une enceinte de cuisson hermétiquement close. Ce principe général sous-tendant la construction et le fonctionnement des appareils de cuisson sous pression à couvercle rentrant est bien connu en tant que tel.

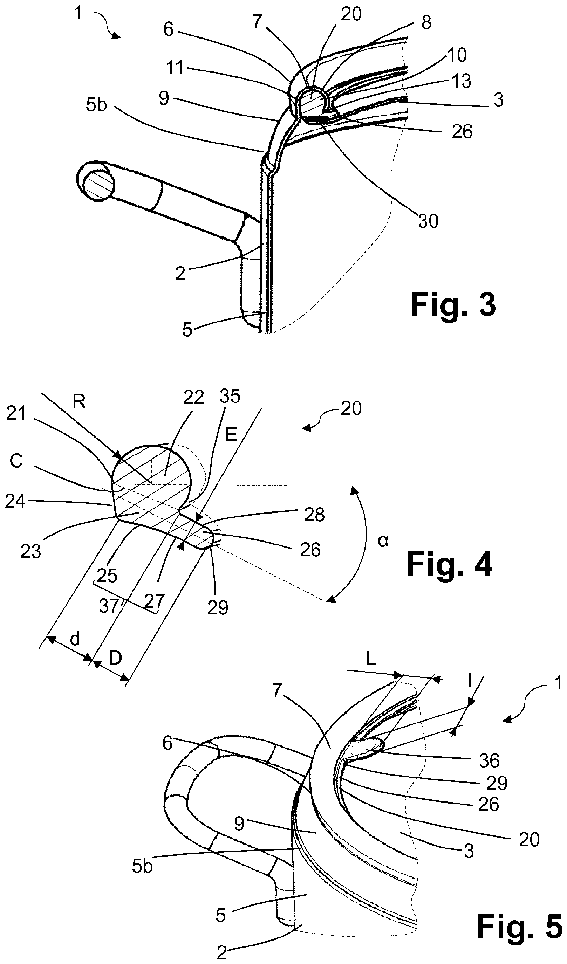

La cuve 2 est fabriquée à partir d'un matériau métallique tel que de l'acier inoxydable ou de l'aluminium, et comporte un fond 4 qui présente par exemple une forme discoïde et est éventuellement pourvu d'un assemblage composite thermo-conducteur, rapporté par exemple par frappe à chaud. La cuve 2 comporte une paroi latérale 5 qui, de préférence, présente une forme annulaire et s'élève à partir et à la périphérie du fond 4. Le bord rentrant 6 s'étend de façon centripète à partir de la paroi latérale 5. Ce bord rentrant 6 présente une extrémité libre roulée 7 munie d'une face interne 8 située en regard de l'intérieur de la cuve 2, c'est-à-dire orientée vers le fond 4 (Fig.2 et 3).

La paroi latérale 5 s'étend entre une extrémité inférieure 5a reliée à la périphérie du fond 4 et une extrémité supérieure 5b prolongée par le bord rentrant 6, lequel converge radialement vers le centre de la cuve 2, c'est-à-dire en direction de l'axe X-X'. De préférence, le bord rentrant 6 comprend un tronçon conique 9 qui s'étend dans le prolongement de la paroi latérale 5. Le bord rentrant 6 se termine par l'extrémité libre roulée 7. La face interne 8 de l'extrémité libre roulée 7 forme un logement 10 destiné à accueillir le joint d'étanchéité 20 annulaire. Le bord rentrant 6 centripète délimite une ouverture d'accès à l'intérieur de la cuve 2, par laquelle peuvent être introduits non seulement les aliments à cuire, mais également le couvercle 3.

Le couvercle 3 est conçu pour être rapporté dans la cuve 2 avec une faculté de mobilité entre au moins :
- d'une part une position de fermeture (Fig.1 et 3) dans laquelle il forme avec la cuve 2 une enceinte de cuisson sensiblement étanche, c'est-à-dire suffisamment hermétique pour permettre une montée en pression en son sein,
- et d'autre part une position d'ouverture (Fig.2), dans laquelle il permet la communication de l'intérieur de l'enceinte avec l'extérieur, de façon que la pression régnant dans l'enceinte corresponde sensiblement à la pression atmosphérique.

En d'autres termes, le couvercle 3 peut être rapporté dans la cuve 2, c'est-à-dire être inséré à l'intérieur de cette dernière, selon un positionnement prédéterminé, positionnement dans lequel il conserve une possibilité de se déplacer de façon contrôlée entre ses positions de fermeture et d'ouverture.

Lorsque le couvercle 3 se trouve en position de fermeture, il vient en contact sensiblement étanche, par un bord périphérique 30, contre le joint d'étanchéité 20 (Fig.3). Au contraire, lorsque le couvercle 3 se trouve en position d'ouverture, il se trouve à distance du joint d'étanchéité 20, empêchant ainsi toute montée en pression de l'enceinte. Le passage de la position d'ouverture à la position de fermeture (et vice versa) s'effectue préférentiellement par un mouvement de translation verticale du couvercle 3 de bas en haut (respectivement de haut en bas).

Dans ce qui suit, on s'attachera exclusivement, pour des raisons de simplicité de description, à décrire un appareil de cuisson sous pression à couvercle rentrant pourvu d'un couvercle 3 déformable, c'est-à-dire dont la forme peut être modifiée par application d'une sollicitation mécanique commandée par l'utilisateur.

Le couvercle 3 est donc un couvercle déformable susceptible d'évoluer entre une configuration géométrique de repos (Fig.2) permettant l'introduction du couvercle 3 dans la cuve 2 sous le joint d'étanchéité 20 et une configuration géométrique déformée (Fig.3) permettant au couvercle 3 de venir en contact sensiblement étanche contre le joint d'étanchéité 20.

Afin de permettre à l'utilisateur d'ouvrir et fermer à volonté l'enceinte de cuisson, le couvercle 3 est préférentiellement un couvercle déformable de façon réversible.

Cela signifie que le couvercle 3 est réalisé dans un matériau élastique et est sollicité en déformation à l'intérieur du domaine élastique dudit matériau. De façon préférentielle, le couvercle 3 est un couvercle flexible, c'est-à-dire qu'il est conçu pour changer de forme sous l'effet d'une sollicitation mécanique en flexion. Par exemple, tel que cela est bien connu en tant que tel dans l'art antérieur, le couvercle 3 est constitué d'un flan métallique discoïde qui a subi un roulage de telle sorte qu'il affecte au repos, en l'absence de sollicitation mécanique extérieure de déformation, une forme de selle, c'est- à-dire une forme courbe sensiblement en U. En d'autres termes, le couvercle 3 présente avantageusement au repos (en l'absence de sollicitation de déformation) une forme de disque cintré, qui correspond en vue de dessus à une ellipse. Grâce à cette forme gauche, ledit couvercle 3 peut être inséré à l'intérieur de la cuve 2 à travers l'orifice délimité par le bord rentrant 6, alors que le diamètre du flan discoïde (avant cintrage) à partir duquel est constitué le couvercle 3 est supérieur à celui de l'ouverture de cuve 2. La figure 2 représente notamment le couvercle 3 alors qu'il est inséré à l'intérieur de la cuve 2, sous le bord rentrant 6.

Tel que visible à la figure 1, l'appareil de cuisson sous pression 1 comprend également un moyen de commande 40 du déplacement du couvercle 3 entre ses positions de fermeture et d'ouverture, ledit moyen de commande 40 étant monté mobile entre au moins une première position correspondant à la position de fermeture du couvercle 3 et une deuxième position correspondant à la position d'ouverture du couvercle 3. Le moyen de commande 40 du déplacement du couvercle 3 est conçu pour exercer un effort sensiblement vertical, selon l'axe X-X', ledit effort étant préférentiellement appliqué au centre du couvercle 3 et permettant de faire passer le couvercle 3 de sa position d'ouverture à sa position de fermeture par traction verticale du bas vers le haut, et inversement, de sa position de fermeture à sa position d'ouverture par relâchement de l'effort de traction exercé, le couvercle 3 retournant en position d'ouverture sous les effets conjugués de son retour élastique et de son propre poids.

Le moyen de commande 40 du déplacement du couvercle 3 comprend un levier 41 mobile conçu pour être actionné manuellement par l'utilisateur. Le levier 41 est monté mobile relativement à un étrier 42 destiné à venir en appui sur le bord rentrant 6. Le levier 41 est relié, par l'intermédiaire d'un système de transmission d'effort (non représenté sur les figures), au centre du couvercle 3 pour que le pivotement du levier 41 entraîne l'exercice d'un effort de traction vers le haut sur le centre du couvercle 3 pour le faire passer de sa position d'ouverture à sa position de fermeture et réciproquement. Un tel moyen de commande est décrit notamment dans le document EP1938718.

Le bord rentrant 6 comporte un tronçon vertical 11 qui s'étend entre le tronçon conique 9 et l'extrémité libre roulée 7 (Fig.2 et 3). L'extrémité libre roulée 7 présente une section transversale circulaire qui s'étend sur un secteur angulaire supérieur à 180°, de préférence égal à 225°. Ainsi, l'extrémité libre roulée 7 se referme sur elle-même. L'extrémité libre roulée 7 comporte un champ 13 qui forme une bordure terminale du bord rentrant 6. L'extrémité libre roulée 7 comporte la face interne 8 qui définit le logement 10. Le logement 10 comprend une ouverture 12 orientée vers le fond 4 de la cuve 2.

Le joint d'étanchéité 20 présente une forme annulaire. Conformément à la figure 4, le joint d'étanchéité 20 comporte un corps 21 monobloc muni d'une portion supérieure 22 dont une section transversale prend la forme d'un secteur circulaire. La portion supérieure 22 est destinée à être agencée de manière ajustée dans le logement 10. La portion supérieure 22 présente donc une section transversale partiellement circulaire qui s'étend sur un secteur angulaire égal à 225°, de valeur comparable au secteur angulaire de la section transversale partiellement circulaire de l'extrémité libre roulée 7. Le corps 21 comporte une portion inférieure 23 présentant une face latérale externe 24 destinée à prendre appui sur le tronçon vertical 11 et une face inférieure 25. La limite de de la portion supérieure est formée dans la section transversale par une corde C du secteur circulaire, illustré en trait mixte sur la figure 4.

Le joint d'étanchéité 20 comporte une lèvre 26 qui s'étend depuis la portion inférieure 23 du corps 21, vers l'intérieur de la forme annulaire. La lèvre 26 se termine par une extrémité libre 29. La lèvre 26 comporte une face inférieure 27 agencée dans le prolongement de la face inférieure 25 de la portion inférieure 23 du corps 21. Dans une section transversale du joint d'étanchéité 20, la face inférieure 27 de la lèvre 26 et la face inférieure 25 de la portion inférieure 23 sont sensiblement rectilignes et alignées. La lèvre 26 comporte une face supérieure 28 qui s'étend depuis une extrémité interne de la section transversale partiellement circulaire de la portion supérieure 22 vers l'extrémité libre 29. La face supérieure 28 est agencée en vis-à-vis du champ 13 (Fig.2 et 3) de l'extrémité libre roulée 7. La lèvre 26 s'étend de manière continue sur toute une périphérie interne 35 du joint d'étanchéité 20. La lèvre 26 présente une épaisseur E constante.

La lèvre 26 forme avec un plan horizontal un angle α égal à 45° (Fig.4). Ainsi, le joint d'étanchéité 20 présente une section transversale en forme de d minuscule, la barre du d formant avec un plan horizontal un angle α égal à 45°.

Le secteur circulaire de la section transversale de la portion supérieure 22 présente un rayon R et la lèvre 26 s'étend radialement depuis la portion inférieure 23 du corps 21 sur une distance D égale au rayon R. Dans une section transversale du joint d'étanchéité 20, la face inférieure 25 de la portion inférieure 23 du corps 21 s'étend sur une distance d égale à 1,5 x R.

Tel que visible sur la figure 3, le couvercle 3 est dans sa configuration déformée. Le bord périphérique 30 du couvercle 3 est en appui sur une surface d'appui 37 (Fig.4) formée par la face inférieure 25 de la portion inférieure 23 du corps 21 et par la face inférieure 27 de la lèvre 26.

Tel que visible à la figure 5, la lèvre 26 comporte une patte 36 de préhension qui s'étend dans le prolongement de la lèvre 26, depuis l'extrémité libre 29, vers l'intérieur de la forme annulaire. La patte présente une épaisseur E égale à l'épaisseur de la lèvre 26. La patte 26 présente avantageusement une longueur L et une largeur l supérieure chacune à 10 millimètres pour que la patte 26 soit facilement préhensible par les doigts de l'utilisateur.

En fonctionnement, le couvercle 3 est introduit dans sa configuration de repos dans la cuve 2 et l'étrier 42 est positionné sur le rebord rentrant 6. Puis l'utilisateur manœuvre le levier 41. Sous l'effet de l'effort de traction verticale exercé par le moyen de commande 40 au niveau du centre du couvercle 3, le couvercle 3 va tout d'abord se déplacer globalement selon un trajet vertical parallèle à l'axe X-X' jusqu'à venir en butée, au niveau du bord périphérique 30, contre la surface d'appui 37 du joint d'étanchéité 20. L'effort de traction du bas vers le haut exercé par le moyen de commande 40 est alors poursuivi ce qui occasionne alors une déformation élastique en flexion du couvercle 3. Cette déformation conduit le couvercle 3 à adopter une forme de disque sensiblement plat (et non plus cintré), forme lui permettant d'épouser de façon sensiblement uniforme et continue la surface d'appui 37, en la déformant vers le haut pour la faire passer dans une position horizontale. On obtient ainsi une enceinte de cuisson parfaitement étanche pour permettre la cuisson des aliments à une pression supérieure à la pression atmosphérique.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Dans une variante de réalisation, la lèvre 26 comporte plusieurs pattes 36 de préhension qui s'étendent depuis une extrémité libre 29 de la lèvre 26 dans le prolongement de la lèvre 26, vers l'intérieur de la forme annulaire. Les pattes 36 sont réparties uniformément sur une périphérie de l'extrémité libre 29.

## Revendications

1. Appareil de cuisson d'aliments sous pression (1) à couvercle rentrant comprenant une cuve (2) comportant une paroi latérale (5) se terminant par un bord rentrant (6) qui s'étend vers l'intérieur de la cuve (2) et qui présente une extrémité libre roulée (7) munie d'une face interne (8) située en regard de l'intérieur de la cuve (2), ainsi qu'un couvercle (3) destiné à être introduit à l'intérieur de la cuve (2), sous la face interne (8) de l'extrémité libre roulée (7), ledit appareil de cuisson d'aliments sous pression (1) comportant un joint d'étanchéité (20) conçu pour être interposé entre la face interne (8) de l'extrémité libre roulée (7) et le couvercle (3) pour réaliser une enceinte de cuisson étanche, ledit joint d'étanchéité (20) présentant une forme annulaire et comportant un corps (21) monobloc muni d'une portion supérieure (22) dont une section transversale prend la forme d'un secteur circulaire et qui est destinée à être agencée dans un logement (10) formé par la face interne (8) de l'extrémité libre roulée (7), le corps (21) comportant une portion inférieure (23) munie d'une face inférieure (25), **caractérisé en ce que** ledit joint d'étanchéité (20) comporte une lèvre (26) qui s'étend depuis la portion inférieure (23) du corps (21), vers l'intérieur de la forme annulaire, la lèvre (26) comportant une face inférieure (27) agencée dans le prolongement de la face inférieure (25) de la portion inférieure (23) du corps (21).

2. Appareil de cuisson d'aliments sous pression (1) à couvercle rentrant selon la revendication 1, **caractérisé en ce que** la lèvre (26) s'étend de manière continue sur toute une périphérie interne dudit joint d'étanchéité (20).

3. Appareil de cuisson d'aliments sous pression (1) à couvercle rentrant selon l'une quelconque des revendications 1 à 2, **caractérisé en ce que**, dans une section transversale dudit joint d'étanchéité (20), la face inférieure (25) de la portion inférieure (23) du corps (21) et la face inférieure (27) de la lèvre (26) sont rectilignes.

4. Appareil de cuisson d'aliments sous pression (1) à couvercle rentrant selon l'une quelconque des revendications 1 à 3, **caractérisé en ce que** la portion supérieure (22) présente une section transversale prenant la forme d'un secteur circulaire qui présente un rayon R et **en ce que** la lèvre (26) s'étend radialement depuis la portion inférieure (23) du corps (21) sur une distance D supérieure au rayon R.

5. Appareil de cuisson d'aliments sous pression (1) à couvercle rentrant selon l'une quelconque des revendications 1 à 4, **caractérisé en ce que** la portion supérieure (22) présente une section transversale prenant la forme d'un secteur circulaire qui présente un rayon R et **en ce que**, dans une section transversale dudit joint d'étanchéité (20), la face inférieure (25) de la portion inférieure (23) du corps (21) s'étend sur une distance d supérieure ou égale au rayon R.

6. Appareil de cuisson d'aliments sous pression (1) à couvercle rentrant selon l'une quelconque des revendications 1 à 5, **caractérisé en ce que** la lèvre (26) présente une épaisseur E constante.

7. Appareil de cuisson d'aliments sous pression (1) à couvercle rentrant selon l'une quelconque des revendications 1 à 6, **caractérisé en ce que** la lèvre (26) forme avec un plan horizontal un angle α supérieur à 20°, de préférence supérieur à 40°.

8. Appareil de cuisson d'aliments sous pression (1) à couvercle rentrant selon l'une quelconque des revendications 1 à 7, **caractérisé en ce que** la lèvre (26) comporte une patte (36) de préhension qui s'étend depuis une extrémité libre (29) de la lèvre (26) dans le prolongement de la lèvre (26), vers l'intérieur de la forme annulaire.

9. Appareil de cuisson d'aliments sous pression (1) à couvercle rentrant selon l'une quelconque des revendications 1 à 8, **caractérisé en ce qu'**il est réalisé dans un matériau élastomère, par exemple en silicone ou en caoutchouc synthétique.

10. Appareil de cuisson d'aliments sous pression (1) à couvercle rentrant selon l'une quelconque des revendications 1 à 9, **caractérisé en ce que** l'extrémité libre roulée (7) comporte un champ (13) qui forme une bordure terminale du bord rentrant (6) et **en ce que** la lèvre (26) comporte une face supérieure (28), la face supérieure (28) étant agencée en vis-à-vis du champ (13).

11. Appareil de cuisson d'aliments sous pression (1) à couvercle rentrant selon l'une quelconque des revendications 1 à 10, **caractérisé en ce que** le couvercle (3) comporte un bord périphérique (30) destiné à venir en appui sur une surface d'appui (37) formée par la face inférieure (25) de la portion inférieure (23) du corps (21) et par la face inférieure (27) de la lèvre (26).

## Patentansprüche

1. Druckkocheinrichtung (1) für Nahrungsmittel mit zurückgesetztem Deckel, das einen Behälter (2), der eine Seitenwand (5) umfasst, die an einem zurückgesetzten Rand (6) endet, der sich zur Innenseite des Behälters (2) erstreckt und der ein freies rundgebogenes Ende (7) aufweist, das mit einer Innenfläche (8) versehen ist, die sich gegenüber dem Inneren des Behälters (2) befindet, sowie einen Deckel (3) umfasst, der dazu vorgesehen ist, in das Innere des Behälters (2) unter die Innenfläche (8) des freien rundgebogenen Endes (7) eingeführt zu werden, wobei die Druckkocheinrichtung (1) für Nahrungsmittel eine Dichtung (20) umfasst, die dazu konzipiert ist, zwischen der Innenfläche (8) des freien rundgebogenen Endes (7) und dem Deckel (3) angeordnet zu werden, um eine abgedichtete Kochkammer herzustellen, wobei die Dichtung (20) eine Ringform aufweist und einen einteiligen Körper (21) umfasst, der mit einem oberen Abschnitt (22) versehen ist, dessen Querschnitt die Form eines Kreissegments annimmt, und der dazu vorgesehen ist, in einer von der Innenfläche (8) des freien rundgebogenen Endes (7) gebildeten Aufnahme (10) angeordnet zu werden, wobei der Körper (21) einen unteren Abschnitt (23) umfasst, der mit einer Unterseite (25) versehen ist, **dadurch gekennzeichnet, dass** die Dichtung (20) eine Lippe (26) umfasst, die sich vom unteren Abschnitt (23) des Körpers (21) zum Inneren der Ringform erstreckt, wobei die Lippe (26) eine Unterseite (27) umfasst, die in der Verlängerung der Unterseite (25) des unteren Abschnitts (23) des Körpers (21) angeordnet ist.

2. Druckkocheinrichtung (1) für Nahrungsmittel mit zurückgesetztem Deckel nach Anspruch 1, **dadurch gekennzeichnet, dass** die Lippe (26) sich kontinuierlich über einen gesamten inneren Umfang der Dichtung (20) erstreckt.

3. Druckkocheinrichtung (1) für Nahrungsmittel mit zurückgesetztem Deckel nach einem der Ansprüche 1 bis 2, **dadurch gekennzeichnet, dass** die Unterseite (25) des unteren Abschnitts (23) des Körpers (21) und die Unterseite (27) der Lippe (26) in einem Querschnitt der Dichtung (20) geradlinig sind.

4. Druckkocheinrichtung (1) für Nahrungsmittel mit zurückgesetztem Deckel nach einem der Ansprüche 1 bis 3, **dadurch gekennzeichnet, dass** der obere Abschnitt (22) einen Querschnitt aufweist, der die Form eines Kreissegments annimmt, das einen Radius R aufweist, und dass die Lippe (26) sich vom unteren Abschnitt (23) des Körpers (21) über einen Abstand D radial erstreckt, der größer als der Radius R ist.

5. Druckkocheinrichtung (1) für Nahrungsmittel mit zurückgesetztem Deckel nach einem der Ansprüche 1 bis 4, **dadurch gekennzeichnet, dass** der obere Abschnitt (22) einen Querschnitt aufweist, der die Form eines Kreissegments annimmt, das einen Radius R aufweist, und dass die Unterseite (25) des unteren Abschnitts (23) des Körpers (21) sich in einem Querschnitt der Dichtung (20) über einen Abstand d erstreckt, der größer als der oder gleich dem Radius R ist.

6. Druckkocheinrichtung (1) für Nahrungsmittel mit zurückgesetztem Deckel nach einem der Ansprüche 1 bis 5, **dadurch gekennzeichnet, dass** die Lippe (26) eine konstante Dicke E aufweist.

7. Druckkocheinrichtung (1) für Nahrungsmittel mit zurückgesetztem Deckel nach einem der Ansprüche 1 bis 6, **dadurch gekennzeichnet, dass** die Lippe (26) mit einer waagerechten Ebene einen Winkel α von mehr als 20°, vorzugsweise mehr als 40° bildet.

8. Druckkocheinrichtung (1) für Nahrungsmittel mit zurückgesetztem Deckel nach einem der Ansprüche 1 bis 7, **dadurch gekennzeichnet, dass** die Lippe (26) eine Greiflasche (36) umfasst, die sich von einem freien Ende (29) der Lippe (26) in der Verlängerung der Lippe (26) zum Inneren der Ringform erstreckt.

9. Druckkocheinrichtung (1) für Nahrungsmittel mit zurückgesetztem Deckel nach einem der Ansprüche 1 bis 8, **dadurch gekennzeichnet, dass** sie aus einem elastomeren Material, beispielsweise Silikon oder synthetischem Kautschuk, besteht.

10. Druckkocheinrichtung (1) für Nahrungsmittel mit zurückgesetztem Deckel nach einem der Ansprüche 1 bis 9, **dadurch gekennzeichnet, dass** das freie rundgebogene Ende (7) einen Bereich (13) umfasst, der eine Endkante des zurückgesetzten Randes (6) bildet, und dadurch, dass die Lippe (26) eine obere Fläche (28) umfasst, wobei die obere Fläche (28) gegenüber dem Bereich (13) angeordnet ist.

11. Druckkocheinrichtung (1) für Nahrungsmittel mit zurückgesetztem Deckel nach einem der Ansprüche 1 bis 10, **dadurch gekennzeichnet, dass** der Deckel (3) einen Umfangsrand (30) umfasst, der dazu vorgesehen ist, auf einer Auflagefläche (37) aufzuliegen, die von der Unterseite (25) des unteren Abschnitts (23) des Körpers (21) und der Unterseite (27) der Lippe (26) gebildet wird.

## Claims

1. Pressure-cooking appliance (1) with a retracting cover comprising a container (2) comprising a side wall (5) ending with a retracting edge (6) which extends inwards from the container (2) and which has a rolled free end (7) provided with an internal face (8) located facing the inside of the container (2), as well as a cover (3) intended to be introduced inside the container (2), under the internal face (8) of the rolled free end (7), said pressure-cooking appliance (1) comprising a sealing gasket (20) designed to be inserted between the internal face (8) of the rolled free end (7) and the cover (3) to achieve a sealed cooking chamber, said sealing gasket (20) having an annular shape and comprising a one-piece body (21) of an upper portion (22) a transversal cross-section of which takes the shape of a circular sector and which is intended to be arranged in a housing (10) formed by the internal face (8) of the rolled free end (7), the body (21) comprising a lower portion (23) provided with a lower face (25), **characterised in that** said sealing gasket (20) comprises a lip (26) which extends from the lower portion (23) of the body (21), inwards from the annular shape, the lip (26) comprising a lower face (27) arranged in the extension of the lower face (25) of the lower portion (23) of the body (21).

2. Pressure-cooking appliance (1) with a retracting cover according to claim 1, **characterised in that** the lip (26) extends continuously over a whole internal periphery of said sealing gasket (20).

3. Pressure-cooking appliance (1) with a retracting cover according to any one of claims 1 to 2, **characterised in that**, in a transversal cross-section of said sealing gasket (20), the lower face (25) of the lower portion (23) of the body (21) and the lower face (27) of the lip (26) are rectilinear.

4. Pressure-cooking appliance (1) with a retracting cover according to any one of claims 1 to 3, **characterised in that** the upper portion (22) has a transversal cross-section taking the shape of a circular sector which has a radius R and **in that** the lip (26) extends radially from the lower portion (23) of the body (21) over a distance D greater than the radius R.

5. Pressure-cooking appliance (1) with a retracting cover according to any one of claims 1 to 4, **characterised in that** the upper portion (22) has a transversal cross-section taking the shape of a circular sector which has a radius R and **in that**, in a transversal cross-section of said sealing gasket (20), the lower face (25) of the lower portion (23) of the body (21) extends over a distance d greater than or equal to the radius R.

6. Pressure-cooking appliance (1) with a retracting cover according to any one of claims 1 to 5, **characterised in that** the lip (26) has a constant thickness E.

7. Pressure-cooking appliance (1) with a retracting cover according to any one of claims 1 to 6, **characterised in that** the lip (26) forms with a horizontal plane, an angle α greater than 20°, preferably greater than 40°.

8. Pressure-cooking appliance (1) with a retracting cover according to any one of claims 1 to 7, **characterised in that** the lip (26) comprises a gripping pad (36) which extends from a free end (29) of the lip (26) in the extension of the lip (26) inwards from the annular shape.

9. Pressure-cooking appliance (1) with a retracting cover according to any one of claims 1 to 8, **characterised in that** it is made of an elastomer material, for example made of silicone or of synthetic rubber.

10. Pressure-cooking appliance (1) with a retracting cover according to any one of claims 1 to 9, **characterised in that** the rolled free end (7) comprises a field (13) which forms a terminal edge of the retracting edge (6) and **in that** the lip (26) comprises an upper face (28), the upper face (28) being arranged opposite the field (13).

11. Pressure-cooking appliance (1) with a retracting cover according to any one of claims 1 to 10, **characterised in that** the cover (3) comprises a peripheral edge (30) intended to come to bear on a bearing surface (37) formed by the lower face (25) of the lower portion (23) of the body (21) and by the lower face (27) of the lip (26).
